# EUROPÄISCHE PATENTSCHRIFT

(11) **EP 2 429 862 B1**
(45) Veröffentlichungstag und Bekanntmachung des Hinweises auf die Patenterteilung: **15.05.2013**
(21) Anmeldenummer: 10709531.7
(22) Anmeldetag: 19.03.2010
(51) Int. Cl.: B60R 13/07

(54) **KRAFTFAHRZEUG**
MOTOR VEHICLE
VÉHICULE AUTOMOBILE

(30) Priorität: 13.05.2009 DE 102009003064
(43) Veröffentlichungstag der Anmeldung: 21.03.2012
(73) Patentinhaber: Robert Bosch GmbH, 70442 Stuttgart (DE)
(72) Erfinder: ZIMMER, Joachim, 77880 Sasbach (DE)
(86) Internationale Anmeldenummer: PCT/EP2010/053581
(87) Internationale Veröffentlichungsnummer: WO 2010/130486

(56) Entgegenhaltungen:
- DE-A1- 2 121 048
- DE-A1- 2 137 516
- DE-A1- 4 132 249
- DE-A1- 4 308 036
- GB-A- 2 077 669
- US-A- 3 695 679

## Beschreibung

Die Erfindung betrifft ein Kraftfahrzeug mit einer Karosserie, in der A-Säulen ausgebildet sind, die jeweils eine Wasserfangleiste mit einem Wasserkanal zur Aufnahme und Abfuhr von durch einen Scheibenwischer von einer in der Karosserie zwischen den A-Säulen gehaltenen Windschutzscheibe verdrängtem Wischwasser aufweisen.

### Stand der Technik

Es ist bereits bekannt, die A-Säulen an beiden Seiten der Frontscheibe des Kraftfahrzeuges mit Wasserfangleisten zu versehen, um die vorderen Seitenscheiben im Bereich der Fahrer- bzw. Beifahrertür von Wasser und Verschmutzung freizuhalten, um so eine freie Sicht auf die Rückspiegel zu gewährleisten.

In jüngster Zeit wurden immer häufiger Aerowischblätter zur Verdrängung von auf der Windschutzscheibe befindlichem Wasser eingesetzt. Die besagten Aerowischblätter haben aufgrund ihrer geschlossenen Spoilergeometrie allerdings die negative Begleiterscheinung, eine im Vergleich zu herkömmlichen Bügelwischblättern große Unterdruckzone auf ihrer der Strömung abgewandten Seite auszubilden. Dies führt dazu, dass das der Aufwärtsbewegung des Wischhebels zunächst durch die Wischbewegung verdrängte Wasser zwar vom Wischblatt an die Wasserfangleiste und somit den Wasserkanal in der A-Säule zur Abfuhr des Wassers weitergeleitet wird, beim Abwärtswischen jedoch durch den an dem Wischblatt entstehenden Unterdruck das Wasser aus der Wasserfangleiste wieder angesaugt wird und dadurch auf die Windschutzscheibe und insbesondere in das Fahrersichtfeld zurückströmt. Dies kann zu erheblichen Einschränkungen des Sichtfeldes des Fahrers führen. Dieser Effekt hat in einigen Ländern und bei einigen Fahrzeugtypen bereits dazu geführt, bei niedrigen HSQ-Anforderungen wieder auf konventionelle Wischblätter umzustellen.

Die Ausbildung der Rückströmungszone aufgrund des Unterdruckes und die damit verbundene Bildung eines Wasserfilms im Sichtfeld des Fahrers hängt zum einen stark von der Geometrie der A-Säule ab und zum anderen von der Aerodynamik des Fahrerzeugs im Bereich der A-Säule ab. Große Wassermengen begünstigen die Rückströmung des Wassers, auch "Water pull-back-Effekt" genannt, und bilden sich insbesondere in A-Säulen, in denen das Wasser nicht schnell genug aus dem Wasserkanal der Wasserfangleiste abgeführt bzw. evakuiert wird.

Bei modernen Fahrzeugen wird ferner ein möglichst harmonischer Übergang zwischen Fronthaube und Außenfläche der A-Säule angestrebt. Dies führt nachteilig dazu, dass die untere Öffnung der Wasserfangleiste im Bereich des Windschattens der Fronthaube angeordnet ist, wodurch sie nur geringfügig in Längsrichtung mit Fahrtwind angeströmt wird. Die Folge ist, dass nur eine sehr geringe Luftströmung in dem Wasserkanal erzeugt wird, was ebenfalls mit einer verminderten Wasserabfuhr gleichzusetzen ist.

Die DE 2 137 516 offenbart ein kraftfahrzeug mit einer Karosserie gemäß dem Oberbegriff des Anspruchs 1.

Es ist daher Aufgabe der vorliegenden Erfindung, eine Fahrzeugumgebung im Bereich der Windschutzscheibe und der A-Säule so zu gestalten, dass das Fahrzeug für den Einsatz von Aerowischblättern unabhängig von der äußeren Fahrzeuganströmung und der Fahrzeuggeschwindigkeit geeignet ist.

### Offenbarung der Erfindung

Diese Aufgabe wird erfindungsgemäß dadurch gelöst, dass zur Vermeidung einer Wasserrückströmung von auf der Wasserfangleiste gesammeltem Wischwasser auf die Windschutzscheibe ein Anströmkanal an der Fahrzeugkarosserie vorgesehen ist, welcher so angeordnet ist, dass er einer Einlassseite an der unterseite der Wasserfangleiste eine ausreichende Luftmenge zuführt, um in dem Wasserkanal eine vermehrte Luftströmung zur beschleunigten Wasserabfuhr in Richtung des Dachs der Karosserie zu erzeugen.

Durch eine Anströmung an der Unterseite der Wasserfangleiste wird zum einen der Ablauf des Wassers in Richtung des Dachs der Karosserie unterstützt. Zum anderen wird ein Unterdruck in dem Wasserkanal erzeugt, der zu einem Ansaugen sowie einer beschleunigten Abfuhr des durch die Wischblätter der Wasserfangleiste zugeführten Wassers führt. Vorteilhafterweise ist die Saugkraft dabei größer als die durch den Unterdruck an dem Aerowischblatt erzeugte Kraft.

Um die Fahrgeschwindigkeit optimal auszunutzen, ist in einem Ausführungsbeispiel die Einlassseite des Anströmkanals an der Fahrzeugfront angeordnet. Dadurch kann der Fahrtwind zur Erzeugung der Luftströmung genutzt werden. Aufgrund des wachsenden Staudrucks mit zunehmender Fahrgeschwindigkeit wird die Luft im Anströmkanal beschleunigt und damit der Unterdruck im Wasserkanal und somit die Saugkraft weiter erhöht.

Eine Möglichkeit, die Einlassseite des Anströmkanals an der Fahrzeugfront vorzugehen, bietet die bereits in der Karosserie vorhandene Öffnung für die Motorkühlung oder die Öffnung für die Bremskühlung. Alternativ kann die Anlassseite des Anströmkanals auch im Bereich der Scheinwerfer vorgesehen sein.

In einem Ausführungsbeispiel ist der erfindungsgemäße Anströmkanal als geschlossenes Kunststoffprofil ausgeführt, welches an oder in der Karosserie anbringbar ist. Das Kunststoffprofil kann dabei so ausgeformt sein, dass es an die Kontur der Karosserie angepasst ist, um möglichst wenig Strömungswiderstände an der Fahrzeugoberfläche zu erzeugen. Natürlich ist es möglich, das geschlossene Kunststoffprofil an die Farbe der Karosserie anzupassen, um ein möglichst homogenes Erscheinungsbild des Kraftfahrzeuges zu erzeugen.

In einem weiteren Ausführungsbeispiel der vorliegenden Erfindung ist der Anströmkanal einteilig mit der Karosserie ausgebildet. Dabei kann der Anströmkanal beispielsweise durch ein Seitenteil und/oder ein Kotflügel und/oder eine Motorhaube gebildet sein.

Aus ästhetischen Gründen kann der Anströmkanal vorderseitig unterhalb der Motorhaube angeordnet sein. Damit ist gewährleistet, dass der Anströmkanal das Gesamterscheinungsbild der Karosserie nicht beeinträchtigt und gleichzeitig ein mit zunehmender Fahrgeschwindigkeit wachsender Staudruck mit der Zunahme der bei größerer Fahrgeschwindigkeit auf die Windschutzscheibe auftreffenden und damit vom Scheibenwischer zu verdrängenden Wassermenge einhergeht.

Zur Verringerung der Wasserrückströmung in das Sichtfeld des Fahrers kann die Geometrie des Wasserkanals so ausgebildet sein, dass der Wasserkanal der Wasserfangleiste im Wesentlichen unterhalb der Windschutzscheibe angeordnet ist. Dabei sollte die Kanalgeometrie so ausgelegt sein, dass sie ein ausreichend großes Wasservolumen aufnehmen kann. Ist die Kanalgeometrie weitestgehend unterhalb der Windschutzscheibe angeordnet, so kann das von dem Wasserkanal umschlossene Volumen ausreichend groß und trotzdem ein schlankes, insbesondere flach bauendes Design an der Fahrzeugoberfläche zu sehen sein.

In einem weiteren Ausführungsbeispiel ist die Wasserfangleiste mit einem schmalen seitlich angeordneten Schlitz versehen, welcher die Bildung einer Unterdruckes im Wasserkanal unterstützt. Wenn ferner der Schlitz in der Wasserfangleiste eine vergleichsweise geringe Bauhöhe aufweist, wird dadurch ein Rückstrom des Wassers in das Sichtfeld des Fahrers bzw. des Beifahrers weiter vermindert.

Der Anströmkanal kann fahrerseitig an oder in der Karosserie oder aber auch sowohl auf Fahrer- und auf Beifahrerseite vorgesehen sein. Die beidseitige Luftführung bietet sich vorwiegend bei Gegenlauf-Wischsystemen an, die einseitige Luftführung vorwiegend bei Gleichlauf-Wischsystemen.

Hinsichtlich weiterer vorteilhafter Ausgestaltung der vorliegenden Erfindung wird auf die Unteransprüche sowie die nachfolgende Zeichnung verwiesen.

### Ausführungsbeispiel

Es zeigen
- Figur 1: eine schematische Darstellung des "Water pull-back"-Effektes auf einer Windschutzscheibe bei Einsatz eines Aerowischblattes gemäß dem Stand der Technik;
- Figur 2: eine Druckverteilung an dem Aerowischblatt gemäß Figur 1 im Bereich der A-Säule;
- Figur 3: eine schematische Darstellung eines Kraftfahrzeuges mit einem in die Karosserie integrierten Anströmkanal;
- Figur 4: Kraftfahrzeug mit einem zum Anbau eines Anströmkanals geeignetem Fronthaubendesign; und
- Figur 5: eine schematische Querschnittsteildarstellung eines Kraftfahrzeuges mit einer erfindungsgemäßen Wasserfangleiste.

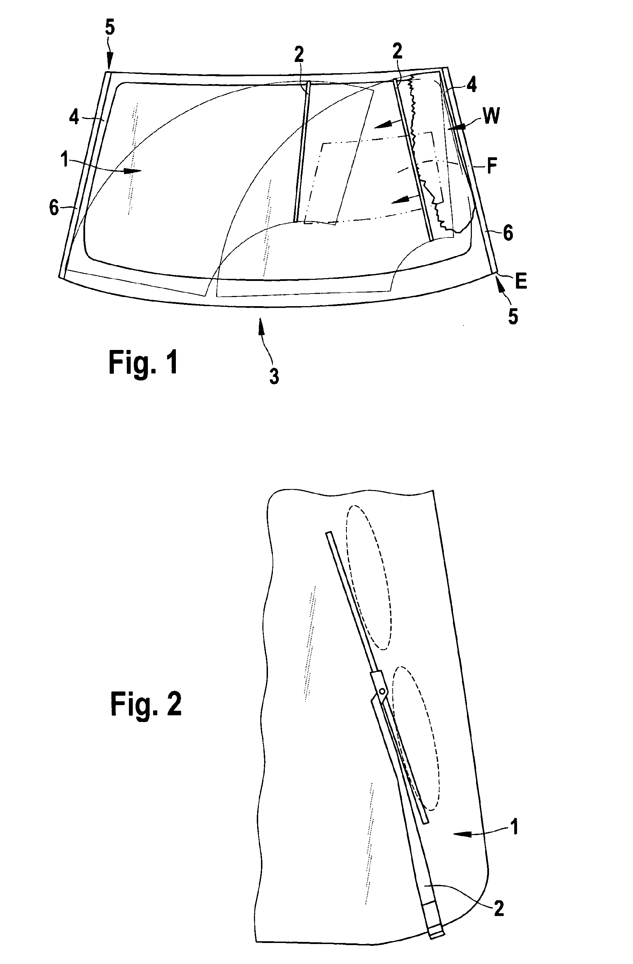

Figur 1 zeigt eine schematische Darstellung eines "Water pull-back-Effects" auf einer Windschutzscheibe 1 bei Einsatz eines Aerowischblattes 2 gemäß dem Stand der Technik.

Die Windschutzscheibe 1 ist zwischen zwei in der Karosserie 3 ausgebildeten A-Säulen 4 gehalten, in denen in jeweils eine Wasserfangleiste 5 mit einem Wasserkanal 6 zur Abfuhr von durch den Scheibenwischer 2 verdrängtem Wasser W ausgebildet sind. Der Scheibenwischer 2 weist Aerowischblätter mit einer geschlossen Spoilergeometrie auf. Der sogenannte Water pull-back-Effekt entsteht dadurch, dass in der Aufwärtsbewegung des Aerowischblattes 2 durch die Wischbewegung verdrängtes Wasser zwar vom Aerowischblatt an die Wasserfangleiste 5 und somit den Wasserkanal 6 in der A-Säule 4 zur Abfuhr des Wassers weitergeleitet wird. Beim Abwärtswischen des Wischblattes 2 entstehen jedoch, wie in Figur 2 durch die gestrichelten Linien näher dargestellt, Unterdruckzonen, durch die das Wasser aus der Wasserfangleiste 5 wieder angesaugt wird und dadurch auf die Windschutzscheibe 1 und insbesondere in das Fahrersichtfeld F zurückströmt. Dies führt zu einer erheblichen Beeinträchtigung des Fahrersichtfeldes.

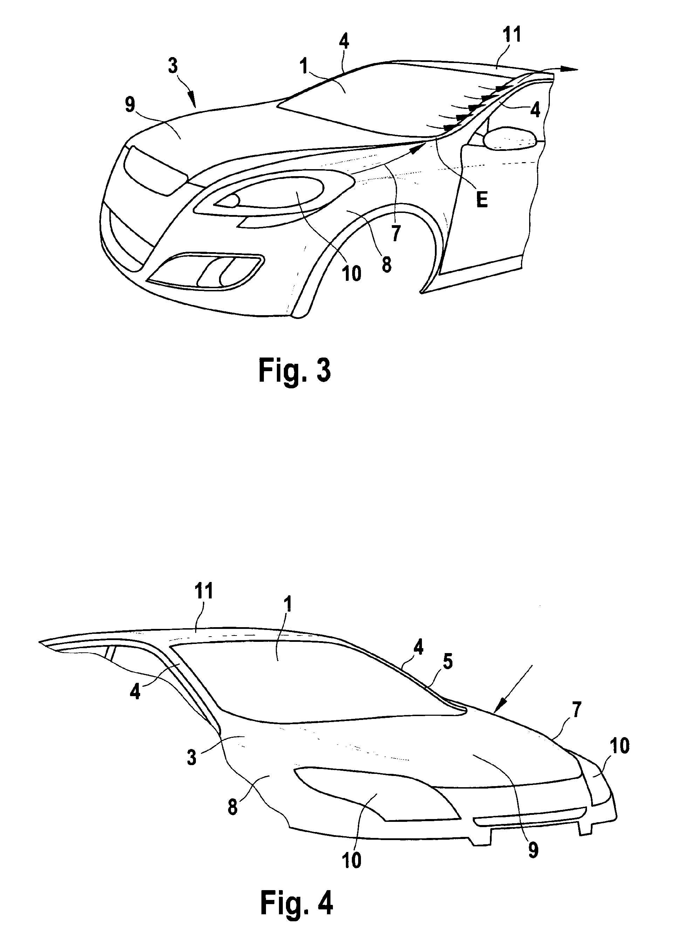

Zur Vermeidung einer solchen Rückströmung von in der Wasserfangleiste 5 gesammeltem Wasser auf die Windschutzscheibe 1 ist gemäß Figur 3 ein Anströmkanal 7 an der Karosserie 3 des Fahrzeuges vorgesehen. Der Anströmkanal 7 ist in diesem Ausführungsbeispiel einteilig mit der Karosserie 3 ausgebildet, ist hier durch den Kotflügel 8 und die Motorhaube 9 gebildet. Durch die Anströmung der Wasserfangleiste 5 an derer Einlassseite E durch den Anströmkanal 7 wird zum Einen der Ablauf des Wasserflusses in Richtung des Daches 11 der Karosserie 3 unterstützt und zum Anderen wird ein Unterdruck im Wassertal 6 erzeugt, der zu einem Ansaugen des Wassers von der Windschutzscheibe sowie einer beschleunigten Abfuhr des durch die Wischerblätter 2 der Fangleiste 5 zugeführten Wassers führt.

Die Einlassseite des Anströmkanals 7 ist an der Fahrzeugfront im Öffnungsbereich des Scheinwerfers 10 angeordnet. Durch Anordnung der Einlassseite des Anströmkanals 7 im Bereich des Scheinwerfers 10 kann der Fahrtwind zur Erzeugung der Luftströmung genutzt werden, wodurch die Strömung im Anströmkanal 7 mit dass mit zunehmender Fahrtgeschwindigkeit aufgrund des wachsenden Staudrucks ebenfalls beschleunigt wird, was zu einem Unterdruck im Wasserkanal 6 in der Wasserfangleiste 5 der A-Säule führt. So wird die Fahrtgeschwindigkeit optimal ausgenutzt, um das in dem Wasserkanal 6 der Wasserfangleiste 5 gesammelte Wasser optimal über das Dach 11 des Kraftfahrzeuges abzuführen.

Figur 4 zeigt eine alternative Ausführungsform der vorliegenden Erfindung, bei der der Anströmkanal 7 als geschlossenen Kunststoffprofil ausgeführt ist, welches an einen geeigneten Bereich - hier mit dem Pfeil dargestellt - anbringbar ist. Das Kunststoffprofil ist hier an die Kontur der Karosserie 3 angepasst, um möglichst wenig Strömungswiderstand an der Fahrzeugoberfläche zu erzeugen, gleichzeitig aber der Wasserfangleiste 5 eine ausreichende Luftmenge zuzuführen, um das von der Windschutzscheibe 1 verdrängte Wasser schnell genug über das Dach aus der Wasserfangleiste 5 abzuführen. Die Farbe des Kunststoffprofil ist ferner an die Farbe der Karosserie angepasst, wodurch ein homogenes Erscheinungsbild der Fahrzeugkarosserie erreicht wird.

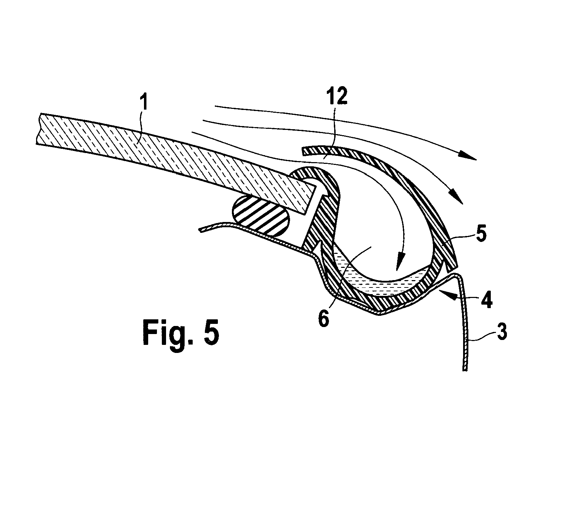

Die Figur 5 zeigt eine schematische Querschnittsteildarstellung eines Kraftfahrzeuges mit einer erfindungsgemäßen Wasserfangleiste 5. Die Wasserfangleiste 5 ist im Bereich der A-Säule 4 der Karosserie 3 des Kraftfahrzeuges so angeordnet, dass der darin befindliche Wasserkanal 6 das von der Windschutzscheibe 1 verdrängte Wasser über einen Schlitz 12 aufnehmen kann.

Die Geometrie des Wasserkanals 6 ist so ausgebildet, dass der Wasserkanal 6 der Wasserfangleiste 5 im Wesentlichen unterhalb der Windschutzscheibe 1 angeordnet ist. Durch die Anordnung des Wasserkanals 6 bzw. der Wasserfangleiste 5 weitestgehend unterhalb der Windschutzscheibe 1 kann ein ausreichend großes Wasservolumen von der Wasserfangleiste 5 aufgenommen werden, ohne dabei die ästhetische Wirkung eines schlank und flach bauenden Designs an der Fahrzeugoberfläche zu beeinträchtigen. Der Schlitz 12 weist eine vergleichsweise geringe Bauhöhe auf. Dadurch wird zum Einen die Bildung eines Unterdruckes im Wasserkanal 6 unterstützt, zum Anderen wird ein Rückströmen des Wassers W in das Sichtfeld F des Fahrers bzw. des Beifahrers vermindert.

## Patentansprüche

1. Kraftfahrzeug mit einer Karosserie (3), in der A-Säulen (4) ausgebildet sind, die jeweils eine Wasserfangleiste (5) mit einem Wasserkanal (6) zur Aufnahme und Abfuhr von durch einen Scheibenwischer (2) von einer in der Karosserie zwischen den A-Säulen (4) gehaltenen Windschutzscheibe (1) verdrängtem Wasser (W) aufweisen, **dadurch gekennzeichnet, dass** zur Vermeidung einer Wasserrückströmung von in der Wasserfangleiste gesammeltem Wasser (W) auf die Windschutzscheibe (1) ein Anströmkanal (7) an der Karosserie (3) vorgesehen ist, welcher so angeordnet ist, dass er einer Einlassseite (E) an der Unterseite der Wasserfangleiste (5) eine ausreichende Luftmenge zuführt, um in dem Wasserkanal (6) eine vermehrte Luftströmung zur beschleunigten Wasserabfuhr in Richtung des Dachs der Karosserie zu erzeugen.

2. Kraftfahrzeug nach Anspruch 1, **dadurch gekennzeichnet, dass** der Anströmkanal (7) als geschlossenes Kunststoffprofil ausgeführt ist, welches an oder in der Karosserie (3) anbringbar ist.

3. Kraftfahrzeug nach Anspruch 1, **dadurch gekennzeichnet, dass** der Anströmkanal (7) einteilig mit der Karosserie (3), insbesondere durch ein Seitenteil und/oder einen Kotflügel (8) und/oder eine Motorhaube (9) gebildet ist.

4. Kraftfahrzeug nach einem der vorhergehenden Ansprüche, **dadurch gekennzeichnet, dass** der Anströmkanal (7) vorderseitig, insbesondere unterhalb der Motorhaube (9) angeordnet ist.

5. Kraftfahrzeug nach einem der vorhergehenden Ansprüche, **dadurch gekennzeichnet, dass** eine Einlassseite des Anströmkanals (7) an der Fahrzeugfront angeordnet ist.

6. kraftfahrzeug nach Anspruch 5, **dadurch gekennzeichnet, dass** die Einlassseite (E) des Anströmkanals (7) an der Öffnung für die Motorkühlung oder der Öffnung für die Bremskühlung angeordnet ist.

7. Kraftfahrzeug nach Anspruch 5, **dadurch gekennzeichnet, dass** die Einlassseite (E) des Anströmkanals (7) im Bereich der Scheinwerfer (10) vorgesehen ist.

8. Kraftfahrzeug nach einem der vorhergehenden Ansprüche, **dadurch gekennzeichnet, dass** der Wasserkanal (6) der Wasserfangleiste (5) im Wesentlichen unterhalb der Windschutzscheibe (1) angeordnet ist.

## Claims

1. Motor vehicle with a body (3) in which A pillars (4) are formed, said A pillars each having a water-catching strip (5) with a water channel (6) for receiving and removing water (W) displaced by a wiper (2) from a windscreen (1) held in the body between the A pillars (4), **characterized in that**, in order to avoid water (W) collected in the water-catching strip from flowing back onto the windscreen (1), an approach-flow channel (7) is provided on the body (3), said approach-flow channel being arranged in such a manner that it supplies a sufficient quantity of air to an inlet side (E) on the lower side of the water-catching strip (5) in order to produce increased flow of air in the water channel (6) for the accelerated removal of water in the direction of the roof of the body.

2. Motor vehicle according to Claim 1, **characterized in that** the approach-flow channel (7) is designed as a closed plastics profile which can be fitted on or in the body (3).

3. Motor vehicle according to Claim 1, **characterized in that** the approach-flow channel (7) is formed integrally with the body (3), in particular by a side part and/or a wing (8) and/or an engine bonnet (9).

4. Motor vehicle according to one of the preceding claims, **characterized in that** the approach-flow channel (7) is arranged on the front side, in particular below the engine bonnet (9).

5. Motor vehicle according to one of the preceding claims, **characterized in that** an inlet side of the approach-flow channel (7) is arranged on the front of the vehicle.

6. Motor vehicle according to Claim 5, **characterized in that** the inlet side (E) of the approach-flow channel (7) is arranged at the opening for the engine cooling or at the opening for the brake cooling.

7. Motor vehicle according to Claim 5, **characterized in that** the inlet side (E) of the approach-flow channel (7) is provided in the region of the headlights (10).

8. Motor vehicle according to one of the preceding claims, **characterized in that** the water channel (6) of the water-catching strip (5) is substantially arranged below the windscreen (1).

## Revendications

1. Véhicule automobile comprenant une carrosserie (3) dans laquelle sont réalisées des colonnes A (4) qui présentent chacune une moulure de collecte d'eau (5) avec un canal d'eau (6) pour recevoir et évacuer l'eau (W) repoussée par un essuie-glace (2) depuis un pare-brise (1) maintenu dans la carrosserie entre les colonnes A (4), **caractérisé en ce que** pour éviter un retour de l'écoulement d'eau de l'eau (W) recueillie dans la moulure de collecte d'eau sur le pare-brise (1), un canal d'apport (7) est prévu sur la carrosserie (3), lequel est disposé de telle sorte qu'il apporte à un côté d'entrée (E) au niveau du côté inférieur de la moulure de collecte d'eau (5) une quantité d'air suffisante pour produire dans le canal d'eau (6) un écoulement d'air accru pour l'évacuation accélérée de l'eau dans la direction du toit de la carrosserie.

2. Véhicule automobile selon la revendication 1, **caractérisé en ce que** le canal d'apport (7) est réalisé sous forme de profilé fermé en plastique qui peut être monté sur ou dans la carrosserie (3).

3. Véhicule automobile selon la revendication 1, **caractérisé en ce que** le canal d'apport (7) est formé d'une seule pièce avec la carrosserie (3), en particulier par une partie latérale et/ou une aile (8) et/ou un capot de moteur (9).

4. Véhicule automobile selon l'une quelconque des revendications précédentes, **caractérisé en ce que** le canal d'apport (7) est disposé du côté avant, en particulier sous le capot de moteur (9).

5. Véhicule automobile selon l'une quelconque des revendications précédentes, **caractérisé en ce que** le côté d'entrée du canal d'apport (7) est disposé à l'avant du véhicule.

6. Véhicule automobile selon la revendication 5, **caractérisé en ce que** le côté d'entrée (E) du canal d'apport (7) est disposé au niveau de l'ouverture pour le refroidissement du moteur ou au niveau de l'ouverture pour le refroidissement des freins.

7. Véhicule automobile selon la revendication 5, **caractérisé en ce que** le côté d'entrée (E) du canal d'apport (7) est prévu dans la région des phares (10).

8. Véhicule automobile selon l'une quelconque des revendications précédentes, **caractérisé en ce que** le canal d'eau (6) de la moulure de collecte d'eau (5) est disposé essentiellement en dessous du pare-brise (1).
